# EUROPEAN PATENT APPLICATION

(11) **EP 4 752 168 A1**
(43) Date of publication of application: **03.06.2026**
(21) Application number: 25171529.8
(22) Date of filing: 21.04.2025
(51) Int. Cl.: C08G 73/10, C09D 179/08

(54) **PRECURSOR COMPOSITIONS, VARNISHES, POLYETHERIMIDE-POLYIMIDE RESINS, AND ARTICLES PREPARED THEREFROM**

(71) Applicant: SHPP Global Technologies B.V., Mt. Vernon, IN 47620 (US)
(72) Inventor: PATIL, Dadasaheb V., Mt. Vernon, IN (US); KALYANARAMAN, Viswanathan, Mt. Vernon, IN (US)
(74) Representative: Balder IP Law, S.L.

(57) **Abstract**

A polyamic acid prepolymer composition prepared from: an amine-terminated polyetherimide oligomer; a dianhydride or dianhydride derivative; optionally a diamine, an endcapping agent, a branching agent, a crosslinking composition, or a combination thereof; and a solvent. A varnish composition, including: a polyamic acid composition; optionally a crosslinking composition; optionally an additive; and optionally a solvent, wherein a dynamic viscosity of the varnish composition is 10,000 to 200,000 cP, or 10,000 to 100,000 cP, or 10,000 to 80,000 cP, as determined at a solids content of 10 wt% in 1-methylpyrrolidin-2-one at 25 °C. A method of preparing a polyamic acid prepolymer composition includes combining an amine-terminated polyetherimide oligomer, a dianhydride or dianhydride derivative, and a solvent, to form the polyamic acid prepolymer composition.

## Description

### BACKGROUND

Disclosed herein are precursor compositions, varnishes including the partially cured precursor compositions, and polyetherimide-polyimides formed from the fully cured precursor compositions and varnishes, and articles prepared from therefrom.

Polyimides, in particular polyetherimides (PEI) are amorphous, transparent, high performance thermoplastic polymers having a glass transition temperature (T_{g}) of greater than 180 °C. Polyimides possesses excellent thermal, mechanical, and chemical properties and thus have been used in a wide range of electronic materials such as mainboards, insulating coating materials, insulating films, coverlays, bonding sheets, semiconductors, and electrode protective films for thin film transistor liquid crystal displays and copper-clad laminates/flexible copper clad laminates. However, conventional polyimides are insoluble in many organic solvents, and often require very high temperatures for imidization, making processing difficult and thus limiting applications of conventional polyimides in the formation of precursor compositions (also known as prepolymer compositions), varnishes, optionally thermosetting polyimides, and coatings including the polyimides. Furthermore, some conventional polyimides obtained after heating and curing a varnish including, e.g., a polyamic acid precursor (prepolymer) composition, have been found to have one or more insufficient properties such as tensile elongation, flexibility, adhesion to films and metal foils, heat resistance, residual stresses, and the like. There accordingly remains a need for new precursors, varnishes, and polyimides that can have an improved property, such as those referenced above. It would further be advantageous if other desirable properties were maintained.

### BRIEF DESCRIPTION

According to an aspect, a polyamic acid prepolymer composition is prepared from: an amine-terminated polyetherimide oligomer; a dianhydride or dianhydride derivative; a first solvent; and optionally a diamine, an end-capping agent, a branching agent, a first crosslinking composition, or a combination thereof.

Another aspect provides a varnish composition, comprising: the polyamic acid prepolymer composition, which has been partially cured to provide the corresponding polyamic acid, a fully cured thermoplastic polyetherimide-polyimide, a thermosetting polyetherimide-polyimide, or a combination thereof; optionally a second crosslinking composition, an additive composition, a second solvent, or a combination thereof, wherein a dynamic viscosity of the varnish composition is 10,000 to 200,000 cP, or 10,000 to 100,000 cP, or 10,000 to 80,000 cP, as determined at a solids content of 10 wt% in 1-methylpyrrolidin-2-one at 25 °C.

In another aspect polyetherimide-polyimide composition comprises the fully cured polyamic acid prepolymer composition or the varnish composition.

Another aspect provides a polyetherimide-polyimide composition, having: a glass transition temperature of equal to or more than 150 °C, as determined by differential scanning calorimetry; a peel strength of greater than 1 N/mm, or greater than 2 N/mm, or greater than 3 N/mm, as determined according to IPC 2.4.8; a thermal decomposition temperature greater than 300 °C; a 24 hour water absorption of less than 1 weight percent; a coefficient of thermal expansion below its Tg of not greater than or equal to 40 micrometer/meter-°C; a dielectric constant of 2 to 5, or 2.5 to 4, or 2.8 to 3.2 when measured at 10 GHz and 23 °C, as determined by dielectric spectroscopy; a dissipation factor of 0.00001 to 0.01, or 0.001 to 0.01, or 0.001 to 0.008 when measured at 10 GHz and 23 °C, as determined by dielectric spectroscopy; or a combination thereof.

Another aspect provides a method of preparing the polyamic acid prepolymer composition, the method comprising combining an amine-terminated polyetherimide oligomer; a dianhydride or dianhydride derivative and optionally a bis(ether anhydride) or bis(ether anhydride derivative); a first solvent; and optionally a diamine, an end-capping agent, a branching agent, a first crosslinking composition, or a combination thereof under conditions effective to form the polyamic acid prepolymer composition.

### DETAILED DESCRIPTION

Described herein is the use of an amine-functionalized polyetherimide oligomer as a co-reactant, i.e., as a comonomer, in the preparation of polyamic acid prepolymer compositions, varnishes including the partially cured polyamic acid prepolymer composition, a fully cured polyetherimide-polyimide thermoplastic or thermosetting resin composition formed from the prepolymer compositions and varnishes, and articles including the polyetherimide-polyimides produced therefrom. It is believed by the inventor hereof that introduction of amine-functionalized polyetherimide oligomers as a reactive component in a polyimide composition can improve solubility and thus processing of polyimides compared to conventional polyimides, while maintaining or improving one or more other key properties such as flexibility, heat resistance, adhesion, or tensile elongation.

The amine-functionalized polyetherimide oligomers include polyetherimide oligomers of the formula H₂N-R'-L-NH₂, wherein L comprises a polyetherimide linker and R' is an organic group, for example R as described in formula (1) below. The polyetherimide linker can comprise more than 1, for example 2 to 200, or 3 to 100, or 5 to 50 repeating structural units of formula (1) 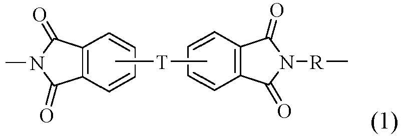 wherein each R is independently the same or different, and is a substituted or unsubstituted divalent C₁₋₄₀ organic group, such as a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, in particular a halogenated derivative of any of the foregoing. In some aspects R is divalent group of one or more of the following formulas (2) 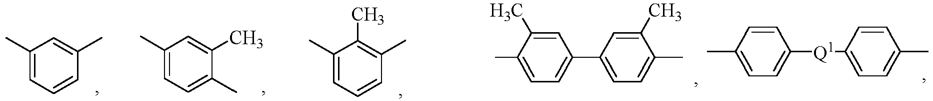 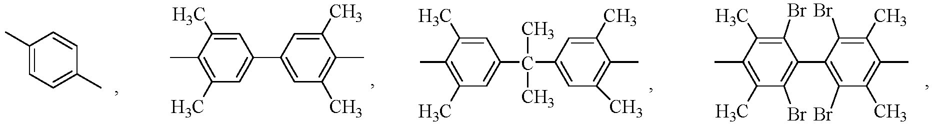 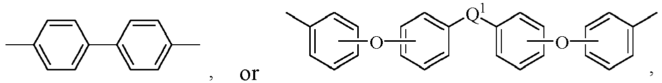 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some aspects R is m-phenylene, p-phenylene, a diarylene ether, e.g., 4,4'-diarylene ether, or a diarylene sulfone, in particular bis(4,4'-phenylene)sulfone, bi(3,4'-phenylene)sulfone, bis(3,3'-phenylene)sulfone, or a combination comprising at least one of the foregoing. In some aspects, at least 10 mole percent or at least 50 mole percent of the R groups contain sulfone groups or ether groups, and in other aspects no R groups contain sulfone or ether groups.

Further in formula (1), T is a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula (3) 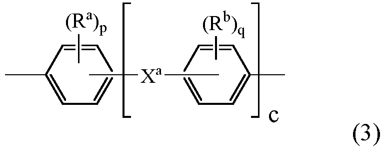 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (3a) 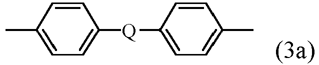 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific aspect Z is a derived from bisphenol A, such that Q in formula (3a) is 2,2-isopropylidene.

In an aspect in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O wherein Z is a divalent group of formula (3a), and Q is 2,2-isopropylidene.

The polyetherimide oligomer can include additional structural polyetherimide units of formula (1) wherein at least 50 mole percent (mol%) of the R groups are bis(4,4'-phenylene)sulfone, bis(3,4'-phenylene)sulfone, bis(3,3'-phenylene)sulfone, bis(4,4'-phenylene)ether, bis(3,4'-phenylene)ether, bis(3,3'-phenylene)ether or a combination thereof, and the remaining R groups are p-phenylene, m-phenylene, or a combination thereof; and Z is 2,2-(4-phenylene)isopropylidene, i.e., a bisphenol A moiety.

In some aspects, the polyetherimide oligomer further optionally comprises additional structural imide units that are not polyetherimide units, for example imide units of formula (4) 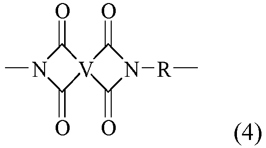 wherein R is as described in formula (1) and each V is the same or different, and is a substituted or unsubstituted C₆₋₂₀ aromatic hydrocarbon group, for example a tetravalent linker of the formulas 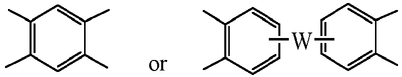 wherein W is a single bond, -O-, -S-, -C(O)-, -SO₂-, -SO-, a C₁₋₁₈ hydrocarbylene group, - P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some aspects, no additional imide units are present in the polyetherimide.

The polyetherimide oligomer can be prepared by any of the methods known to those skilled in the art, including the reaction of a C₄₋₄₀ bis(ether anhydride) of formula (5) or a chemical equivalent thereof, with a C₁₋₄₀ diamine of formula (6) 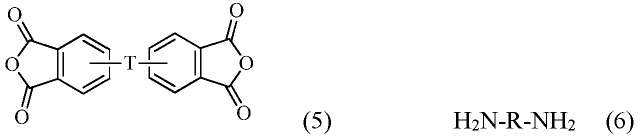 wherein T and R are defined as described above. Any additional units in the polyetherimide oligomer can be manufactured using a combination of an aromatic bis(ether anhydride) of formula (5) and an additional dianhydride that is not a bis(ether anhydride), for example pyromellitic dianhydride or bis(3,4-dicarboxyphenyl) sulfone dianhydride.

Illustrative examples of C₄₋₄₀ bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Exemplary C₁₋₄₀ diamines include ethylene diamine, propylene diamine, hexamethylenediamine, polymethylated 1,6-n-hexanediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylene-diamine, 2,5-dimethylheptamethylenediamine, 2, 2-dimethylpropylene-diamine, N-methyl-bis(3-aminopropyl)amine, 3-methoxyhexamethylenediamine, 1,2-bis(3-aminopropoxy)ethane, bis(3-aminopropyl)sulfide, 1,4-cyclohexanediamine, bis-(4-aminocyclohexyl)methane, m-phenylenediamine, p-phenylenediamine, o-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, oxydianiline, bis(aminophenoxy)phenyl) sulfone, bis(4-aminophenyl) sulfide, bis-(4-aminophenyl) sulfone (also known as 4,4'-diaminodiphenyl sulfone (DDS)), and bis(4-aminophenyl) ether. The C₁₋₄₀ organic diamine can be m-phenylenediamine, p-phenylenediamine, 4,4'-diaminodiphenyl sulfone, 4,4'-oxydianiline, bis(4-(4-aminophenoxy)phenyl) sulfone, or a combination thereof.

The polyetherimide oligomers can also include siloxane blocks of formula (8) 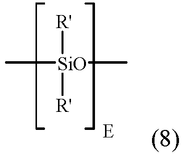 wherein E has an average value of 2 to 100, 2 to 31, 5 to 75, 5 to 60, 5 to 15, or 15 to 40, each R' is independently a C₁₋₁₃ monovalent hydrocarbyl group. For example, each R' can independently be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkyl, C₇₋₁₃ arylalkoxy, C₇₋₁₃ alkylaryl, or C₇₋₁₃ alkylaryloxy group, optionally halogenated. In an aspect no bromine or chlorine is present, and in another aspect no halogens are present. In an aspect, the polysiloxane blocks comprise R' groups that have minimal hydrocarbon content, such as a methyl group.

The poly (siloxane-imide)s can be prepared from a bis(ether anhydride) (6) and an organic diamine (6) as described above or mixture of organic diamines, and a polysiloxane diamine of formula (9) 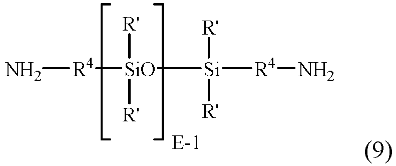 wherein R' and E are as described in formula (8), and R⁴ is each independently a C₂-C₂₀ hydrocarbon, in particular a C₂-C₂₀ arylene, alkylene, or arylenealkylene group. In an aspect R⁴ is a C₂-C₂₀ alkylene group, and E has an average value of 5 to 100, 5 to 60, 5 to 15, or 15 to 40. The diamine component can contain 10 to 90 mol%, or 20 to 50 mol%, or 25 to 40 mol% of polysiloxane diamine (9) and 10 to 90 mol%, or 50 to 80 mol%, or 60 to 75 mol% of organic diamine (3), for example as described in US Patent 4,404,350. The poly(siloxane-imide) oligomer can be a block, random, or graft copolymer.

Examples of specific poly(siloxane-imide) oligomers are described in US Pat. Nos. 4,404,350, 4,808,686 and 4,690,997. In an aspect, the poly(siloxane imide) oligomer is a poly(siloxane-etherimide) and includes siloxane units of formula (10) 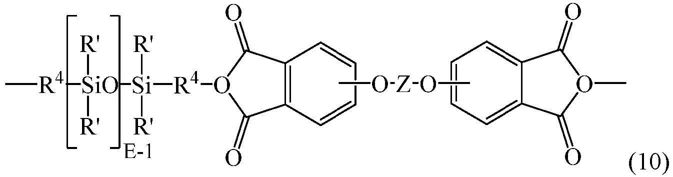 wherein R' and E of the siloxane are as in formula (8), the R and Z of the imide are as in formulas (2) and (3), R⁴ is the same as R⁴ as in formula (9), and n is an integer from 5 to 100. In a specific aspect, the R of the etherimide is a phenylene, Z is a residue of bisphenol A, R⁴ is n-propylene, E is 2 to 50, 5, to 30, or 10 to 40, n is 5 to 100, and each R' is methyl. The oligomer is terminated by amino groups as described herein.

When present, the relative amount of polysiloxane units and imide units in the poly(siloxane-imide) oligomer depends on the desired properties and are selected using the guidelines provided herein. In an aspect the poly(siloxane-imide) oligomer comprises 10 to 50 wt%, 10 to 40 wt%, or 20 to 35 wt% polysiloxane units, based on the total weight of the poly(siloxane-imide) oligomer. In some aspects, the polyetherimide oligomer is not a poly(siloxane-imide). For example, in some aspects the polyetherimide oligomer does not comprise siloxane units.

The amine-terminated polyetherimide oligomer can be prepared by methods known in the art. For example, the bis (ether anhydride) and diamine can be reacted in substantially equimolar amounts or with the amine or bis(ether anhydride) in molar excess, optionally in the presence of a catalyst. The term "substantially equimolar amounts" means a molar ratio of bis(ether anhydride) to diamine of 0.9:1 to 1.1:1, preferably 0.95:1 to 1.05:1, and more preferably 0.98:1 to 1.02:1. In an aspect, the amine is used in a molar excess. Exemplary molar excess can be described by a molar ratio of amine to bis(ether anhydride) of less than or equal to 20:1, or less than or equal to 15:1, or less than or equal to 10:1; for example 1.2:1 to 20:1, or 1.5:1 to 20:1, or 2:1 to 20:1. In some aspects, the polyetherimide oligomer is prepared in the absence of a solvent.

A catalyst can optionally be present during the polymerization to form the amine-terminated polyetherimide oligomer. Exemplary catalysts include imidization catalysts such as sodium aryl phosphinates, guanidinium salts, pyridinium salts, imidazolium salts, tetra(C₇₋₂₄ arylalkylene) ammonium salts, dialkyl heterocycloaliphatic ammonium salts, bis-alkyl quaternary ammonium salts, (C₇₋₂₄ arylalkylene)(C₁₋₁₆ alkyl) phosphonium salts, (C₆₋₂₄ aryl)(C₁₋₁₆ alkyl) phosphonium salts, phosphazenium salts, aliphatic carboxylic acids, aromatic carboxylic acids, or combinations thereof. The anionic component of the salt is not particularly limited, and can be, for example, chloride, bromide, iodide, sulfate, phosphate, acetate, maculate, tosylate, and the like. A catalytically active amount of the catalyst can be determined by one of skill in the art without undue experimentation, and can be, for example, more than 0 to 5 mol% percent, or 0.01 to 2 mol%, or 0.1 to 1.5 mol%, or 0.2 to 1.0 mol% based on the moles of organic diamine.

The amine-terminated polyetherimide oligomer can be monofunctional, difunctional, multifunctional, or a combination thereof. The polyetherimide oligomer can have a total amine end group concentration of 50 to 5,000 microequivalents per gram, or 50 to 2,500 microequivalents per gram, or 50 to 1,500 or 50 to 750 microequivalents per gram of the polyetherimide oligomer, as determined by nuclear magnetic resonance spectroscopy. Other reactive end groups can be present, e.g., carboxylic acid end groups, carboxylic anhydride end groups, or the like. The total concentration of end groups can be analyzed by various titration and spectroscopic methods well known in the art. Spectroscopic methods include, infrared, nuclear magnetic resonance, Raman spectroscopy, and fluorescence. Examples of infrared methods are described in J. A. Kreuz, et al., and J. Poly. Sci. Part A-1, vol. 4, pp. 2067-2616

(1966). Examples of titration methods are described in Y. J. Kim, et al., Macromolecules, vol. 26, pp. 1344-1358 (1993). It may be advantageous to make derivatives of polymer end groups to enhance measurement sensitivity using, for example, variations of methods as described in K. P. Chan et al., Macromolecules, vol. 27, p. 6731 (1994) and J. S. Chao, Polymer Bull., vol. 17, p. 397 (1987).

The amine-terminated polyetherimide oligomer can further have one or more of: a glass transition temperature (T_{g}) of greater than 150 °C, as determined by differential scanning calorimetry; a weight average molecular weight equal to or greater than 1,500 grams per mole as determined by gel permeation chromatography using polystyrene standards; a total reactive end group concentration of 50 to 5,000 microequivalents per gram, as determined by nuclear magnetic resonance spectroscopy; a residual organic diamine of 0.05 to 1,000 ppm by weight, based on the total weight of the amine-terminated polyetherimide oligomer, as determined by ultra-performance liquid chromatography; an amide-acid concentration of 0.5 to 5,000 microequivalents per gram, as determined by nuclear magnetic resonance spectroscopy; a polydispersity of less than 4.5, e.g., 1.1 to 4.5; a non-reactive end group of greater than 0.05 ppm by weight, based on the total weight of the amine-terminated polyetherimide oligomer, as determined by nuclear magnetic resonance spectroscopy; or a combination thereof.

The amine-terminated polyetherimide oligomer is combined with a monomer effective to provide a polyamic acid prepolymer composition having repeating polyamic acid units that do or do not include ether groups derived from the monomer. Such polyamic acid units can be further reacted to provide polyimide units of formula (4) described above.

Thus, the monomer can include a dianhydride or a derivative thereof, where the dianhydride or derivative thereof is not a bis(ether anhydride) or derivative thereof, e.g., not a bis(ether anhydride) of formula (5). Suitable dianhydrides are of formula (7) 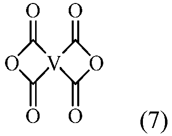 wherein V is as defined above in reference to formula (4).

It is to be understood that while the dianhydride or derivative thereof is a required monomer, it is possible to optionally also include bis(ether anhydride)s (or derivatives thereof) of formula (5). For example, bisphenol A dianhydride can be present in some aspects. As used herein, a dianhydride derivative or bis(ether anhydride) derivative includes the corresponding compound wherein at least one anhydride group is replaced by a carboxylic acid, carboxylic acid salt, or carboxylic halide, or a combination thereof, for example, hydrolyzed (i.e., ring-opened or partially ring-opened) dianhydride and bis(anhydride) derivatives include diacid anhydrides, tetraacids, carboxylic acid esters, and the corresponding salts thereof.

In some aspects, the polyamic acid prepolymer composition includes a bis(ether anhydride) of the formula 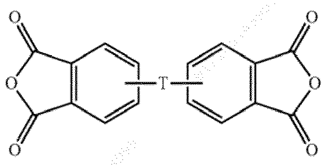 wherein T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. In some aspects, Z is a group derived from bisphenol A, resorcinol, hydroquinone, methyl hydroquinone, t-butyl hydroquinone, di-t-butyl hydroquinone, biphenol, tetramethyl bisphenol A, 6,6'-dihydroxy-3,3,3',3'-tetramethylspiro(bis)indane, 1,2-dihydroxybenzene, isophorone bisphenol, 1,1-bis(4-hydroxyphenyl)-1-phenyl-ethane, dimethylindanone bisphenol, 3,3'-dimethylbisphenol cyclohexane, fluorenone bisphenol, or a bi-(hydroxy aryl)-N-aryl isoindolinone.

Exemplary dianhydrides that can be used to form the polyimide (which can optionally include polyetherimide units) include, for example, pyromellitic dianhydride (PMDA), oxydiphthalic anhydride (ODPA), thioether diphthalic anhydride (TDPA), sulfonyldiphthalic anhydride (SDPA), biphenyldipthalic anhydride (BPDA), cyclohexane dianhydride (CHDA), benzophenone dianhydride (BTDA), cyclobutane dianhydride (CBDA), biphenol dianhydride (BPoDA), 3,3'-biphenoxy dianhydride, 3,4'-biphenoxy dianhydride, 4,4'-biphenoxy dianhydride, mellophanic dianhydride (MPDA), trimellitic anhydride (TMA), or its derivatives, an isomer thereof, a hydrogenated derivative thereof, or a combination thereof.

In the polyamic acid prepolymer composition, the amine-terminated polyetherimide oligomer, and the dianhydride or derivative thereof can be present in substantially equimolar amounts, or with the polyetherimide oligomer or dianhydride or derivative thereof in molar excess. The term "substantially equimolar amounts" means a molar ratio of dianhydride or derivative thereof to polyetherimide oligomer of 0.9:1 to 1.1:1, or 0.95:1 to 1.05:1, or 0.98:1 to 1.02:1. Exemplary molar excess can be described by a molar ratio of dianhydride or derivative thereof to polyetherimide oligomer of less than or equal to 25:1, or less than or equal to 20:1, or less than or equal to 15:1; or 2:1 to 25:1, or 5:1 to 25:1, or 10:1 to 25:1.

The solvent used in the polyamic acid prepolymer composition can be, for example, N,N-dimethylformamide, N,N-dimethylacetamide, N,N-diethylacetamide, N,N-dimethylmethoxyacetamide, N-methyl-2-pyrrolid-one, N-cyclohexylpyrrolidinone, N-methylcaprolactam, 1,3-dimethyl-2-imidazolidone, 1,2-dimethoxy-ethane, 1,3-dioxane, 1,4-dioxane, tetrahydrofuran, γ-butyrolactone, γ-caprolactone, dimethyl-sulfoxide, benzophenone, acetone, methyl ethyl ketone, methyl isobutyl ketone, cyclohexanone, cyclopentanone, diglyme, triglyme, tetra-glyme, N,N-dimethylethyleneurea, N,N-dimethylpropyleneurea, tetramethylurea, propylene glycol phenyl ether, anisole, toluene, xylene, veratrole, o-dichlorobenzene, chlorobenzene, trichloroethane, methylene chloride, chloroform, pyridine, picoline, ethyl lactate, n-butyl acetate, butyl cellosolve acetate, butyl carbitol acetate, ethyl cellosolve acetate, ethyl carbitol acetate, propylene carbonate, sulfolane, diphenyl ether, phenetole, benzonitrile, cresol, 1,3-dimethyl-2-imidazolidinone, diphenyl sulfone, water, an ionic liquid, or a combination thereof.

Preferably, the solvent is anhydrous and does not include water. For example, the solvent can include less than 100 ppm, or less than 50 ppm, or less than 10 ppm of water.

The amount of solvent in the polyamic acid prepolymer composition is not particularly limited. The solids content can be from 1 to 60 wt%, based on the total weight of the prepolymer composition. For example, the solids content can be from 1 to 60 wt%, or 10 to 50 wt%, or 20 to 30 wt%, or 10 to 25 wt%, or 10 to 20 wt%, or 5 to 15 wt%, each based on the total weight of the prepolymer composition.

An optional diamine can be present in addition to the dianhydride, the polyetherimide oligomer, and the solvent, and when present can be of formula H₂N-R-NH₂, wherein R is a C₆₋₃₀ aromatic or heteroaromatic hydrocarbon, a straight or branched chain C₄₋₂₀ alkylene, a C₃₋₈ cycloalkylene, or a halogenated derivative thereof. Preferably R is a divalent group of the formula: 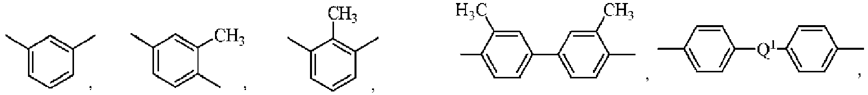 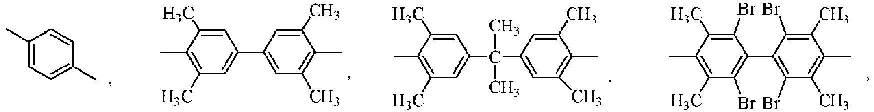 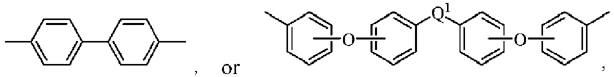 wherein
Q¹ is -O-, -S-, -C(O)-, -N=N-, -SO₂-, -SO-, or -P(R^{a})(=O)-;
R^{a} is a C₁₋₈ alkyl, C₆₋₁₂ aryl, or - C_{y}H_{2y}-;
y is an integer from 1 to 5 or a halogenated derivative thereof, or -(C₆H₁₀)-; and
z is an integer from 1 to 4.

In some aspects, the optional diamine is present, and is 1,4-butane diamine, 1,5-pentanediamine, 1,6- hexanediamine, 1,7-heptanediamine, 1,8-octanediamine, 1,9-nonanediamine, 1,10-decanediamine, 1,12- dodecanediamine, 1,18-octadecanediamine, 3-methylheptamethylenediamine, 4,4- dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, 1,3-bis(4-aminophenoxy)benzene, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5- methyl-4,6-diethyl-1,3-phenylene-diamine, benzidine, 3,3'-dimethylbenzidine, 3,3'-dimethoxybenzidine, 1,5-diaminonaphthalene, 9, 10-dimethylanthracene, 4,4'-methylenedianiline, 4,4'-oxydianiline, 4,4'- azodianiline, bis(4-aminophenyl) methane, bis(2-chloro-4-amino-3,5-diethylphenyl) methane, bis(4- aminophenyl) propane, 2,4-bis(p-amino-t-butyl) toluene, bis(p-amino-t-butylphenyl) ether, bis(p-methyl- o-aminophenyl) benzene, bis(p-methyl-o-aminopentyl) benzene, 1,3-bis(4-aminophenoxy)benzene, 1,3- diamino-4-isopropylbenzene, bis(4-aminophenyl) sulfide, 4,4'-diaminodiphenylsulfone, 3,4'-diaminodiphenylsulfone, 3,3'-diaminodiphenylsulfone, bis(4-aminophenyl) ether, 2,6-diamino, 3,3'- diaminobenzophenone, 4,4'-diaminobenzophenone, a regioisomer thereof, a C₁₋₄ alkylated or poly(C₁₋₄)alkylated derivative thereof, a halogenated derivative thereof, or a combination thereof.

A catalyst can optionally be present in the polyamic acid prepolymer composition, for example an imidization catalyst as described above used to form the amine-terminated polyetherimide oligomer.

An end-capping agent can optionally be present in the polyamic acid prepolymer composition, to control the molecular weight of the polyamic acids and thus the polyetherimide-polyimides formed from the polyamic acids. The end-capping agent can be a monofunctional compound that can react with an amine, anhydride, or carboxylic acid. Exemplary compounds include monofunctional aromatic anhydrides such as phthalic anhydride, an aliphatic monoanhydride such as maleic anhydride, or monofunctional aldehydes, ketones, esters isocyanates, aromatic monoamines such as aniline, or C₁-C₁₈ linear or cyclic aliphatic monoamines. The amount of end-capping agent that can be added depends on the desired molecular weight of the polyetherimide-polyimide, and can be, for example, more than 0 to 10 mole percent (mol%), or 0.1 to 10 mol%, or 0.1 to 6 mol%, based on the moles of endcapping agent and amine-terminated oligomer, optional diamine, and dianhydride reactants. In some aspects, no endcapping agent is used.

A branching agent can optionally be included in the polyamic acid prepolymer composition. Branching agents include polyfunctional organic compounds containing at least three functional groups, such as amine, anhydride, hydroxyl, carboxyl, carboxylic anhydride, haloformyl, carboxylic ester, carboxylic acid salts, or a combination of the foregoing functional groups. Specific examples include trimellitic acid, trimellitic anhydride, tris-phenol TC (1,3,5-tris((p- hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. In some aspects, a particular type of branching agent is used to create branched materials. These branched materials have statistically more than two end groups. The branching agent is added in an amount sufficient to achieve the desired branching content, that is, more than two end groups.

A method of preparing the polyamic acid prepolymer composition includes combining the amine-terminated polyetherimide oligomer, the dianhydride or dianhydride derivative, the optional diamine, branching agent, end-capping agent, or combination thereof, and the first solvent, under conditions effective to form the polyamic acid prepolymer composition. In some aspects, the dianhydride or dianhydride derivative is combined with the first solvent to form a mixture, and the amine-terminated polyetherimide oligomer and optional diamine are added to the reaction mixture to form the polyamic acid prepolymer composition. In some aspects, the amine-terminated polyetherimide oligomer and optional diamine are combined with the solvent to form a mixture and the dianhydride or dianhydride derivative is added to the mixture to form the polyamic acid prepolymer composition.

The reactive components of the polyamic acid prepolymer composition are then partially or fully cured to provide a varnish. The partial cure can result in a polyamic acid composition, a thermoplastic or thermosetting polyetherimide-polyimide (i.e., a polyetherimide-polyimide resin), or a combination thereof. For example, the varnish composition can be prepared by combining the amine-terminated polyetherimide oligomer, the dianhydride or dianhydride derivative, the diamine and other optional components, and the solvent by stirring until a viscous solution is formed. In some aspects, the method of manufacturing the varnish composition can include heating the polyamic acid prepolymer composition with agitation or stirring at a temperature and for a period of time effective to dissolve the components in the solvent, or at a temperature lower than the boiling point of the solvent. The temperature is not particularly limited and can be selected to avoid instability of the polyamic acid. Preferably, the temperature is 50 °C or less, or 30 °C or less, or 25 °C or less. The polycondensation to form the polyamic acid of the varnish composition is exothermic and the reaction mixture can be cooled to below room temperature as appropriate.

Other exemplary conditions effective to provide the varnish can include a solids content of 1 to 50 wt%, or 20 to 40 wt%, or 25 to 35 wt%. The reaction can be carried out for 2 to 24 hour (hr), or 3 to 16 hr. The reaction can be conducted at reduced, atmospheric, or high pressure. As is known in the art, lower temperatures, shorter reaction times, lower pressures, or a combination thereof favor producing the polyamic acid, while higher temperatures (e.g., up to 200 °C), longer reaction times, higher pressures, or a combination thereof favor producing the thermoplastic or thermosetting polyetherimide-polyimide (i.e., a polyetherimide-polyimide resin).

In some aspects, the first solvent of the prepolymer composition (if present) can be replaced by a second solvent. The second solvent of the varnish composition can be the same or different as the first solvent, when the first solvent is present. The second solvent is preferably a nonpolar solvent having a boiling point of 120 °C or lower, or an aprotic polar solvent having a boiling point of 120 °C or lower, and can be a ketone solvent, an ester solvent, a hydrocarbon solvent, a halogenated solvent, an ether solvent, or a nitrogen-containing solvent. Exemplary ketone solvents include acetone, methyl ethyl ketone, and methyl isobutyl ketone. Exemplary ester solvents include methyl acetate, ethyl acetate, isobutyl acetate. Exemplary hydrocarbon solvents include benzene, toluene, normal hexane, isohexane, cyclohexane, methylcyclohexane, and normal heptane. Exemplary halogenated solvents include dichloromethane, chloroform, and trichloroethylene. Exemplary ether solvents include diethyl ether, tetrahydrofuran, 1,4-dioxane, and 1,3-dioxolane. Exemplary nitrogen-containing solvents include acetonitrile.

Other components can be present in the varnish composition, including a second crosslinking composition, an additive composition, or a combination thereof. The second crosslinking composition can be the same or different as the first crosslinking composition, and can include a curing accelerator, a catalyst, a promoter, e.g., an imidization catalyst as described above, an initiator, a crosslinking agent, a hardener, or a combination thereof.

Exemplary thermosetting crosslinking agents include an epoxy resin, a bismaleimide resin, a cyanate ester resin, a vinyl resin, an acetylene resin, an acrylic resin, a polyimide resin, a benzocyclobutene resin, an urea resin, a melamine-formaldehyde resin, a urea-formaldehyde resin, a xylene resin, a diallylphthalate resin, an aniline resin, a furan resin, a polyurethane resin, a polyurea resin, a mineral-filled silicone, an unsaturated polyester resin, a phenolic resin, a silicone resin, a fluororesin, a benzoxazine resin, or a combination thereof.

The hardener can be a polymercaptan, an alkoxysilane, or a carbodiimide. The polymercaptan can be, for example, trimethylolpropane tris(mercaptopropionate), pentaerythritol tetrakis(3-mercaptopropionate), or the like. The alkoxysilane can be, for example, tetramethoxysilane, tetraethoxysilane, tetrapropoxysilane, tetra-n-butoxysilane, vinyltris(methylethyloximino)silane, vinyl tris-(acetoxime)silane, methyltris(methylethyloximino)silane, methyl tris(acetoxime)silane, vinyl trimethoxysilane, methyl trimethoxysilane, vinyl tris(isopropenoxy)silane, tetraacetoxy-silane, methyl triacetoxysilane, ethyl triacetoxysilane, vinyl triacetoxysilane, di-t-butoxy-diacetoxysilane, methyl tris(ethyl lactate)silane, vinyl tris(ethyl lactate)silane, or the like. The carbodiimide can be, for example, N-(3-dimethylaminopropyl)-N'-ethylcarbodiimide hydrochloride, dicyclohexylcarbodiimide, or the like. Other exemplary hardeners include phenolic resins, polyamines, carboxylic acids, carboxylic anhydrides, and the like.

In some aspects varnish composition further comprises a polyamine, a dicyandiamide, a polyamide, an amidoamine, a Mannich base, a carboxylic acid, a carboxylic anhydride, a phenol-formaldehyde resin, a carboxylic acid-functional polyester, a polysulfide, a polymercaptan, an alkoxysilane, a carbodiimide, an isocyanate, or a combination thereof.

The solvent can optionally be removed from the varnish composition. The varnish composition can be optionally stored before use.

Fully curing the varnish composition provides a thermoplastic or thermoset polyetherimide-polyimide. When prepared according to the methods described herein, the thermoplastic or thermoset polyetherimide-polyimide can advantageously have low levels of residual impurities. For example, the cured product includes less than 25 ppm, for example 0.01 to 25 ppm each of sodium ions, potassium ions, calcium ions, zinc ions, aluminum ions, titanium ions, iron ions, chromium, molybdenum, nickel, and phosphorus ions, and less than 50 ppm, for example 0.01 to 50 ppm each of phosphate ions, sulfate ions, chloride ions, nitrate ions, and nitrite ions.

The varnish can further include an additive composition generally known in the art for polyetherimide compositions, with the provision that the additive(s) are selected so as to not significantly adversely affect the desired properties of the varnish or the polyetherimide-polyimide. Such additives include a particulate filler, a fibrous filler, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, storage stabilizer, ozone inhibitors, optical stabilizer, thickener, conductivity-impacting agent, radiation interceptor, nucleating agent, an anti-fog agent, an antimicrobial agent, a metal inactivating agent, a colorant, a surface effect additive, a radiation stabilizer, a flame retardant, an anti-drip agent, a fragrance, an adhesion promoter, a flow enhancer, a coating additive, or a combination thereof. The total amount of the additive composition (excluding filler) can be 0.001 to 20 wt%, or 0.01 to 10 wt%, or 0.01 to 8 wt%, each based on the total weight of the varnish, excluding any solvent. The total amount of the additive composition including a filler can 0.1 to 80 wt%, or 1 to 70 wt%, based on the total weight of the varnish (excluding any solvent).

The polyetherimide-polyimide formed from the varnish can have a weight average molecular weight (M_{w}) of 5,000 to 300,000 grams per mole (g/mol), 5,000 to 200,000 g/mol, 5,000 to 100,000 g/mol, 5,000 to 70,000 g/mol, 5,000 to 45,000 g/mol as determined by gel permeation chromatography (GPC) using polystyrene standards or MALDI. The polydispersity (PDI) can be less than 4.5, preferably less than 4.0, more preferably less than 3.0, even more preferably less than 2.8.

The polyetherimide-polyimide can have a glass transition temperature of greater than 155 °C, preferably greater than 175 °C, more preferably greater than 190 °C. For example, the T_{g} can be 155 to 280 °C, preferably 175 to 280 °C, more preferably 190 to 280 °C, as determined by differential scanning calorimetry according to ASTM D3418.

The polyetherimide-polyimide can include less than 0.05 to 5,000 ppm by weight, or 0.05 to 1,000 ppm by weight, or 0.05 to 500 ppm by weight, or 0.05 to 250 ppm of residual solvent, based on the total weight of the polyetherimide-polyimide.

The polyetherimide-polyimide can include 0.05 to 1,000 ppm by weight, or 0.05 to 750 ppm by weight, or 0.05 to 500 ppm by weight each of a residual dianhydride and diamine used to prepare the polyetherimide-polyimide, based on the total weight of the polyetherimide-polyimide.

The polyetherimide-polyimide can include 0.05 to 3,000 ppm by weight, or 0.05 to 2,000 ppm by weight, or 0.05 to 1,000 ppm by weight or 0.05 to 500 ppm by weight of a total content of the residual dianhydride and the residual diamine that were used to prepare the polyetherimide-polyimide, based on the total weight of the polyetherimide-polyimide.

The polyetherimide-polyimide can include 0.1 to 100 ppm by weight, 0.1 to 75 ppm by weight, 0.1 to 25 ppm by weight of a metal ion based on the total weight of the polyetherimide-polyimide. Examples of metal ions can include but are not limited to Na, K, Ca, Zn, Al, Cu, Ni, P, Ti, Mg, Mn, Si, Cr, Mo, Co and Fe.

The polyetherimide-polyimide can include 0.1 to 200 ppm by weight, 0.1 to 100 ppm by weight, 0.1 to 50 ppm, 0.1 to 25 ppm by weight of a total content of metal ions based on the total weight of the polyetherimide-polyimide. Examples of metal ions can include but not limited to Na, K, Ca, Zn, Al, Cu, Ni, P, Ti, Mg, Mn, Si, Cr, Mo, Co, Fe, or a combination thereof.

The polyetherimide-polyimide can include 0.3 to 500 ppm by weight, 0.3 to 250 ppm by weight of an anion based on the total weight of the polyetherimide-polyimide. Examples of anions may include but not limited to phosphate, nitrate, nitrite, sulfate, bromide, fluoride, and chloride.

The varnish can be used to form an article including the thermoset or thermoplastic polyetherimide-polyimide, such as a fiber, a layer, a coating, a cast article, a prepreg, a sheet, a composite, or a laminate. The article can include a mainboard, a sheet, an insulating layer, an insulating coating, a corrosive-resistant coating, an insulating film, an adhesive film, a coverlay, a bonding sheet, a semiconductor, electrode protective films for a thin film transistor liquid crystal display, a copper-clad laminate, a flexible copper clad laminate, a circuit board, or a multilayer circuit board. The article can be formed by methods such as spinning, casting, or dip coating the varnish compositions, followed by fulling curing the varnish compositions to form the polyetherimide-polyimide.

Exemplary applications for the polyetherimide-polyimide include, for example, electrical encapsulants, sealing of electromechanical devices, or coatings for articles such as containers, e.g., acid bath containers, water softener tanks, pressure tanks, fuel tanks, and various filament-wound tanks and tank linings or neutralization tanks, or industrial mixers; boat hulls and decks; tiles; building panels; business machine housings; trays, including cable trays; electrical panels; gratings; protective body gear; luggage;; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; printed wiring boards; cast items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toners for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

This disclosure is further illustrated by the following examples, which are nonlimiting.

### EXAMPLES

The components in Table 1 were used to prepare Examples 1 to 17.

**Table 1.**

| Component | Description | Source |
|---|---|---|
| PMDA | Pyromellitic dianhydride (benzene-1,2,4,5-tetracarboxylic dianhydride), CAS RN 89-32-7 | Sigma-Aldrich |
| BTDA | Benzophenone dianhydride (3,3',4,4'-Benzophenone-tetracarboxylic dianhydride), CAS RN 2421-28-5 | Sigma-Aldrich |
| BPoDA | 3,3'-Biphenol dianhydride (3,3'-biphenoxy dianhydride), CAS RN 53303-54-1 | SABIC |
| BPDA | Biphenyl dianhydride (3,3',4,4'-biphenyltetracarboxylic dianhydride), CAS RN 2420-87-3 | Sigma-Aldrich |
| ODPA | 4,4'-Oxydiphthalic anhydride, CAS RN 1823-59-2 | Sigma-Aldrich |
| TDPA | 4,4'-Thioether diphthalic anhydride, CAS RN 25884-43-9 | Sigma-Aldrich |
| h-PMDA | 1,2,4,5-Cyclohexanetetracarboxylic dianhydride, CAS RN 2754-41-8 | Sigma-Aldrich |
| pPD | 1,4-Benzenediamine, CAS RN 106-50-3 | SABIC |
| 4,4'-ODA | 4,4'-Diaminodiphenyl Ether, CAS RN 101-80-4 | Sigma-Aldrich |
| 4,4'-DDS | 4,4'-Diaminodiphenyl Sulfone, CAS RN 80-08-1 | SABIC |
| DAPI | 5,6-amino-1-(4'-aminophenyl)-1,3,3-trimethylindane, CAS RN 54628-89-6 | Sigma-Aldrich |

### Example 1.

A reaction vessel fitted with a stirrer, a heating unit, and a nitrogen inlet is charged with an amine-terminated polyetherimide oligomer (18.85 g, 0.00819 mol) and 275 g of N-methyl pyrrolidone (NMP). Once the oligomer is fully dissolved, pyromellitic dianhydride (7.1516 g, 0.03278 mol) is slowly added and the resulting mixture is stirred to form a homogenous solution. To this solution is added 4,4'-diaminodiphenyl ether (4.7926 g, 0.02393 mol) to provide and the solution is stirred for few hours at 23°C and, optionally charged with a branching agent (0.01 mol% to 10 mol%). The resultant mixture, a polyamic acid prepolymer composition, is stirred for several hours at 23°C obtain a viscous polyamic acid solution (also referred as a varnish), where the polyamic acid solution is a polyetherimide-polyimide precursor. The obtained varnish can be stored in a freezer and thawed for evaluation and use.

### Example 2.

A reaction vessel fitted with a stirrer, a heating unit, and a nitrogen inlet is charged with an amine-terminated polyetherimide oligomer (18.85 g, 0.00819 mol), 200 g of NMP and 20 g of toluene. Once the oligomer is fully dissolved in NMP, pyromellitic dianhydride (7.1516 g, 0.03278 mol) is slowly added and the resulting mixture is stirred to form a homogenous solution. 4,4'-diaminodiphenyl ether (4.7926 g, 0.02393 mol) and optionally a branching agent (0.01 mol% to 10 mol%) is added to the solution and the mixture is stirred at 23 °C. Then, the internal temperature is raised to 160 ° C., and the mixture is heated under reflux at 160 °C for 1 hour for imidization. After completion of the imidization, the temperature is raised to 180-200 °C, and the reaction is continued while toluene is extracted. After the reaction for 12 hours, the oil bath is removed, and the temperature is returned to room temperature to obtain an NMP solution of a thermosetting polyetherimide-polyimide resin (also referred to as a varnish). The obtained varnish can be stored in a freezer and thawed for evaluation and use.

### Example 3

A reaction vessel fitted with a stirrer, a heating unit, and a nitrogen inlet is charged with a 4,4'-diaminodiphenyl ether ((4.7926 g, 0.02393 mol) and 275 g of N-methyl pyrrolidone (NMP). Once the diamine is fully dissolved, pyromellitic dianhydride (7.1516 g, 0.03278 mol) is slowly added and the resulting mixture is stirred to form a homogenous solution. To this solution is added the amine-terminated polyetherimide oligomer (18.85 g, 0.00819 mol), optionally charged with a branching agent (0.01 mol% to 10 mol%), and the solution is stirred for few hours at 23 °C. The resultant mixture is stirred for several hours at 23 °C obtain a viscous polyamic acid solution (also referred as a varnish), which is a polyetherimide-polyimide precursor. The obtained varnish can be stored in a freezer and thawed for evaluation and use.

### Example 4

A reaction vessel fitted with a stirrer, a heating unit, and a nitrogen inlet is charged with 4,4'-diaminodiphenyl ether (4.7926 g, 0.02393 mol), 200 g of NMP and 20 g of toluene. Once the oligomer is fully dissolved in NMP, pyromellitic dianhydride (7.1516 g, 0.03278 mol) is slowly added and the resulting mixture is stirred to form a homogenous solution. To this solution was added an amine-terminated polyetherimide oligomer (18.85 g, 0.00819 mol), and optionally a branching agent (0.01 mol% to 10 mol%). The mixture is stirred at 23 °C for 0.5-3 hours. Then, the internal temperature is raised to 160 °C., and the mixture is heated under reflux at 160 °C for 1 hour for imidization. After completion of the imidization, the temperature is raised to 180-200 °C, and the reaction is continued while toluene is extracted. After the reaction for 12 hours, the oil bath is removed, and the temperature is returned to room temperature to obtain an NMP solution of a thermosetting polyetherimide-polyimide resin (varnish). The obtained varnish can be stored in a freezer and thawed for evaluation and use.

### Example 5

A reaction vessel fitted with a stirrer, a heating unit, and a nitrogen inlet is charged with an amine-terminated polyetherimide oligomer (56.59 g, 0.02459 mol) and 575 g of N-methyl pyrrolidone (NMP). Once the oligomer is fully dissolved, pyromellitic dianhydride (7.1516 g, 0.03278 mol) is slowly added and the resulting mixture is stirred to form a homogenous solution. To this solution is added 4,4'-diaminodiphenyl ether (1.6413 g, 0.00819 mol), and optionally charged with a branching agent (0.01 mol% to 10 mol%). The resulting mixture is stirred for several hours at 23 °C to obtain a viscous polyamic acid solution (also referred as a varnish), which is a polyetherimide-polyimide precursor. The obtained varnish can be stored in a freezer and thawed for evaluation and use.

### Example 6

A reaction vessel fitted with a stirrer, a heating unit, and a nitrogen inlet is charged with an amine-terminated polyetherimide oligomer (12.77 g, 0.00554 mol) and 215 g of N-methyl pyrrolidone (NMP). Once the oligomer is fully dissolved, benzophenone tetracarboxylic dianhydride (7.1516 g, 0.0221 mol) is slowly added and the resulting mixture is stirred to form a homogenous solution. To this solution is added 5,6-amino-1-(4'-aminophenyl)-1,3,3-trimethylindane (4.4343 g, 0.0166 mol), and optionally charged with a branching agent (0.01 mol% to 10 mol%), The resulting mixture is stirred for several hours at 23 °C to obtain a viscous polyamic acid solution (also referred as a varnish), which is a polyetherimide-polyimide precursor. The obtained varnish can be stored in a freezer and thawed for evaluation and use.

### Example 7

A reaction vessel fitted with a stirrer, a heating unit, and a nitrogen inlet is charged with an amine-terminated polyetherimide oligomer (13.9861 g, 0.00607 mol) and 205 g of N-methyl pyrrolidone (NMP). Once the oligomer is fully dissolved, biphenyl dianhydride (7.1516 g, 0.0243 mol) is slowly added and the resulting mixture is stirred to form a homogenous solution. To this solution is added para-phenylene diamine (1.9714 g, 0.01823 mol), and optionally charged with a branching agent (0.01 mol% to 10 mol%), The resulting mixture is stirred for several hours at 23 °C to obtain a viscous polyamic acid solution (also referred as a varnish) of a polyimide precursor. The obtained varnish can be stored in a freezer and thawed for evaluation and use.

### Example 8

A reaction vessel fitted with a stirrer, a heating unit, and a nitrogen inlet is charged with an amine-terminated polyetherimide oligomer (13.265 g, 0.00576 mol) and 220 g of N-methyl pyrrolidone (NMP). Once the oligomer is fully dissolved, biphenol dianhydride (7.1516 g, 0.01494 mol) is slowly added and the resulting mixture is stirred to form a homogenous solution. To this solution is added para-phenylene diamine (1.2132 g, 0.0112 mol), and optionally charged with a branching agent (0.01 mol% to 10 mol%), The resulting mixture is stirred for several hours at 23 °C to obtain a viscous polyamic acid solution (a varnish), which is a polyetherimide-polyimide precursor. The obtained varnish can be stored in a freezer and thawed for evaluation and use.

### Example 9

The example is performed in an analogous manner as the method described in Example 7, except that para-phenylene diamine is changed with 2.7831 g (0.0112 moles) of diamino diphenyl sulfone.

### Example 10: Procedure for casting the polyamic acid varnish solution

The polyamic acid solution of Examples 1 to 9 is solvent cast onto a clean glass substrate and heated to 100 °C under a vacuum to remove the solvent to afford a film. The resulting film is removed from the substrate, transferred to a tenter frame, and heated to 150 °C for 1 hour and then 285 °C for 2 hours. The film is cooled to room temperature under vacuum between the heat treatments to afford a polyetherimide-polyimide film. The resulting film is evaluated for thermal, mechanical, and other properties.

### Example 11: Procedure for preparing a polyamic acid varnish including a crosslinking agent

The polyamic acid solution of Examples 1 to 9 is charged with a crosslinking agent (0.1 wt% to 70 wt%), and an additive composition (0.1 wt% to 70%) based on the total weight of polyamic acid solution, crosslinking agent, and additive(s).

### Example 12: Procedure for casting a polyamic acid varnish including a crosslinking agent

The polyamic acid solution of Examples 1 to 9 is charged with crosslinking agent (0.1 wt% to 70 wt%), and one or more additives (0.1 wt% to 70%) based on the total weight of polyamic acid solution, crosslinking agent, and additive(s). The resultant mixture is solvent cast onto a clean glass substrate and cured at the required temperature and time to provide a fully cured polyetherimide-polyimide film (for example from 120-300 °C). The resulting film is evaluated for thermal, mechanical, and other properties.

### Example 13

A copper clad laminate (CCL) of the present invention can be prepared by any process known to a person skilled in the art. The steps include preheating a varnish prepared in Example 11 to 80-100 °C in an oil bath. Prepregs are prepared by wetting an E-glass cloth with the varnish composition, followed by evaporating the solvent. Curing of the prepregs is accomplished by heating at 120-175 °C for 1 to 30 minutes. Then, disposing copper foil on the top and the bottom of the prepreg, and laminating by hot pressing under 2 to 10 MPa of pressure at 200 °C for 2 hours provides a copper clad laminate.

### Example 14

Carbon fiber-containing composite materials are prepared from a varnish composition as prepared in Example 11 where a varnish is pre-heated to 80-100 °C in an oil bath. A woven carbon fabric is impregnated with the varnish composition by immersing the fabric in the varnish composition for 1 to 10 min. Drying the impregnated carbon fabric at 120 °C for 4 hours in a blast drying oven, followed by laminating the carbon fabric under heat and pressure at 175 °C to 360 °C provides a carbon-fabric containing prepreg composite.

### Example 15:

This example describes the preparation of a 3-layer flexible copper clad laminate. The film obtained from Example 10 is layered with a conductive metal foil such as a copper foil and a dielectric substrate, and the resulting structure is laminated under heat and pressure to obtain the flexible copper clad laminate.

### Example 16

This example describes the preparation of a 2-layer flexible copper clad laminate. The varnish composition from Example 11 is directly coated onto a conductive metal foil such as copper, aluminum, or gold foil, and the solvent is removed under reduced pressure with applied heating.

### Example 17

This example describes the preparation of a coating material. The varnish composition from Example 11 is cast onto a polytetrafluoroethylene (PTFE) substrate to provide a coating layer having a thickness of 25 to 100 micrometers. Drying at 120 to 300 °C for 2-4 hours in a blast drying oven provides a coating over the PTFE substrate.

### Sample analysis/characterization

Glass transition temperature (T_{g}) is determined by dynamic mechanical analysis (DMA) using an RDA rheometer.

DSC measurements of the film samples (5 mg) are performed with a TA Q1000 DSC instrument. The film samples were scanned from 40-450 °C under nitrogen atmosphere. The glass transition temperature is determined from the second heating scan. Heating rate of 20 °C/min is used in these experiments.

Water absorption of the polymer films is determined by % difference in wet weight of film to conditioned weight of film, over conditioned weight of film. To obtain the wet weight, films are immersed in deionized water for 24 hours, patted dry to remove surface moisture, and quickly placed in an airtight container before the weight is measured. To obtain the conditioned weight, the polymer films are dried at 100 °C under vacuum for 24 hours and quickly moved into an airtight container before the weight is measured.

Dielectric constant (Dₖ) and dissipation factor (D_{f}) are measured using a split post dipole resonator, at a frequency of 10 gigahertz (GHz). Films are equilibrated at 23-25 °C, 48-52% relative humidity (RH) environment for 24 hours before measurement in the same environment.

Peel strength values are determined according to IPC 2.4.8, "Peel Strength of Metallic Clad Laminates," Revision C, December 1994, except that the specimen size was 12 centimeters (cm) x 12 cm with a thickness of 1 millimeter (mm). At least four resist strips having a width of 5 mm are cut from the same copper clad laminate. The test strip was peeled back 5 cm at the tab end. The clamp is attached to the peeled back end of the test strip. The specimen is fastened with the hold down fixture so that an unencumbered vertical pull can be exerted. The end of the test strip is in a vertical position ready for testing. The tester is started, and force is applied in the vertical direction at the rate of 50.8 mm per minute (mm/min), until an 8 cm peel is completed. The minimum load is observed and recorded. The actual width of the test strip is measured and recorded. If the full width of the test strip does not peel, the results are discarded, and another strip is evaluated. The peel strength, expressed in units of Newtons per mm (N/mm) is calculated according to the formula: N = LM/WS, where LM is the minimum load (N) and WS is the width of peel strip (mm).

Thermo-gravimetric analysis (TGA) is used to evaluate thermal stability using a TGA Q5000 from TA Instruments. Samples are analyzed at 23 to 800 °C with a heating rate of 10 °C/minute in nitrogen media with a flow rate of 50 mL per minute.

Dynamic viscosity is determined using an Anton Paar MCR-702 parallel plate viscometer. Samples are analyzed at a fixed strain amplitude of 5% at an angular frequency of 10 radians per second (rad/s). Dynamic viscosity is reported as milliPascal-seconds (mPa· s). Alternatively, the dynamic viscosities are obtained using a Brookfield DV3T rheometer operating a CPA-41-Z cone and plate sample cell. Dynamic viscosities are measured at 25 °C in centipoise (cP).

The coefficient of thermal expansion (CTE) is determined using a TMA Q400 machine on 6 mm long, 4 mm wide and 6 mm thick sample bars. CTE value is reported as part per million per degree Kelvin (ppm/K).

This disclosure further encompasses the following aspects, which are nonlimiting.

Aspect 1. A polyamic acid prepolymer composition comprising: an amine-terminated polyetherimide oligomer; a dianhydride or dianhydride derivative that is not a bis(ether anhydride), and optionally a bis(ether anhydride) or bis(ether anhydride) derivative; a solvent; and optionally a diamine, a branching agent (e.g, an acid anhydride or an acid anhydride derivative), a crosslinking composition, or a combination thereof.

Aspect 1a. The polyamic acid prepolymer composition of aspect 1, wherein the acid anhydride branching agent is trimellitic anhydride.

Aspect 1b. The polyamic prepolymer composition of aspect 1, wherein the acid anhydride derivative is a derivative of trimellitic anhydride, a triacid, a carboxylic ester acid, or a carboxylate salt.

Aspect 2. The polyamic acid prepolymer composition of any one of the preceding aspects, wherein the amine-terminated polyetherimide oligomer is monofunctional, difunctional or polyfunctional, preferably wherein the amine-terminated polyetherimide oligomer has a formula H₂N-L-NH₂, wherein L comprises a polyetherimide linker, more preferably wherein preferably wherein L comprises polyetherimide units of the formula 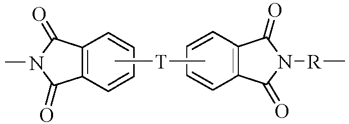 wherein each R is independently the same or different, and is a substituted or unsubstituted divalent C₁₋₄₀ organic group, preferably a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, more preferably wherein R is a divalent group of one or more of the following formulas 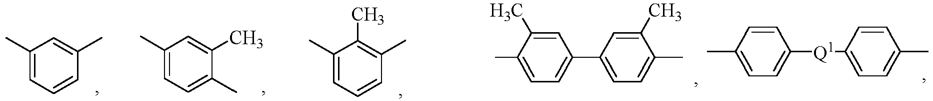 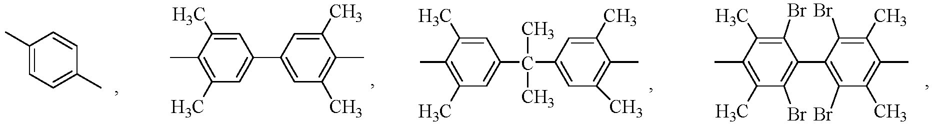 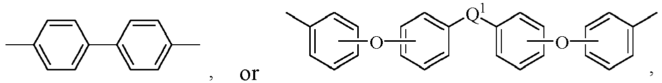 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof, or -(C₆H₁₀)_{z}- wherein z is an integer from 1 to 4; and T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded.

Aspect 3. The polyamic acid prepolymer composition of any one of the preceding aspects, wherein the amine-terminated polyetherimide oligomer has: a glass transition temperature of greater than 150 °C, as determined by differential scanning calorimetry; a weight average molecular weight equal to or greater than 1,500 grams per mole as determined by gel permeation chromatography using polystyrene standards; a total reactive end group concentration of 50 to 5,000 microequivalents per gram, as determined by nuclear magnetic resonance spectroscopy; a residual organic diamine of 0.05 to 1,000 ppm by weight, based on the total weight of the amine-terminated polyetherimide oligomer, as determined by ultra-performance liquid chromatography; an amide-acid concentration of 0.5 to 5,000 microequivalents per gram, as determined by nuclear magnetic resonance spectroscopy; a polydispersity of less than 4.5; a non-reactive end group of greater than 0.05 ppm by weight, based on the total weight of the amine-terminated polyetherimide oligomer, as determined by nuclear magnetic resonance spectroscopy; or a combination thereof.

Aspect 4. The polyamic acid prepolymer composition of any one of the preceding aspects, wherein the dianhydride is a substituted or unsubstituted C₄₋₄₀ dianhydride, preferably pyromellitic dianhydride, oxydiphthalic anhydride, thioether diphthalic anhydride, sulfonyldiphthalic anhydride, biphenyldipthalic anhydride, cyclohexane dianhydride, benzophenone dianhydride, cyclobutane dianhydride, 3,3'-biphenoxy dianhydride, 3,4'-biphenoxy dianhydride, 4,4'-biphenoxy dianhydride, mellophanic dianhydride, a derivative thereof, an isomer thereof, a hydrogenated derivative thereof, a dianhydride derivative thereof, or a combination thereof.

Aspect 5. The polyamic acid prepolymer composition of any one of the preceding aspects, comprising the bis(ether anhydride) of the formula 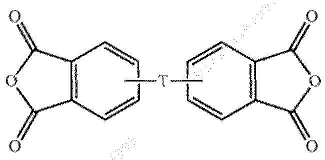 wherein, T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded; preferably wherein Z is a group derived from bisphenol A, resorcinol, hydroquinone, methyl hydroquinone, t-butyl hydroquinone, di-t-butyl hydroquinone, biphenol, tetramethyl bisphenol A, 6,6'-dihydroxy-3,3,3',3'-tetramethylspiro(bis)indane, 1,2-dihydroxybenzene, isophorone bisphenol, 1,1-bis(4-hydroxyphenyl)-1-phenyl-ethane, dimethylindanone bisphenol, 3,3'-dimethylbisphenol cyclohexane, fluorenone bisphenol, or a bi-(hydroxy aryl)-N-aryl isoindolinone.

Aspect 6. The polyamic acid prepolymer composition of any one of aspects 1 to 5, wherein the solvent is N,N-dimethylformamide, N,N-dimethylacetamide, N,N-diethylacetamide, N,N-dimethylmethoxyacetamide, N-methyl-2-pyrrolid-one, N-cyclohexylpyrrolidinone, N-methylcaprolactam, 1,3-dimethyl-2-imidazolidone, 1,2-dimethoxy-ethane, 1,3-dioxane, 1,4-dioxane, tetrahydrofuran, γ-butyrolactone, γ-caprolactone, dimethyl-sulfoxide, benzophenone, acetone, methyl ethyl ketone, methyl isobutyl ketone, cyclopentanone, cyclohexanone, diglyme, triglyme, tetra-glyme, N,N-dimethylethyleneurea, N,N-dimethylpropyleneurea, tetramethylurea, propylene glycol phenyl ether, toluene, xylene, anisole, veratrole, o-dichlorobenzene, chlorobenzene, trichloroethane, methylene chloride, chloroform, pyridine, picoline, ethyl lactate, n-butyl acetate, butyl cellosolve acetate, butyl carbitol acetate, ethyl cellosolve acetate, ethyl carbitol acetate, propylene carbonate, sulfolane, diphenyl ether, phenetole, benzonitrile, cresol, 1,3-dimethyl-2-imidazolidinone, diphenyl sulfone, water, an ionic liquid, or a combination thereof.

Aspect 7. The polyamic acid prepolymer composition of any one of aspects 1 to 6, wherein the optional diamine is present and is of formula H₂N-R-NH₂, wherein R is a C₆₋₃₀ aromatic or heteroaromatic hydrocarbon, a straight or branched chain C₄₋₂₀ alkylene, a C₃₋₈ cycloalkylene, or a halogenated derivative thereof; preferably wherein R is a divalent group of the formula: 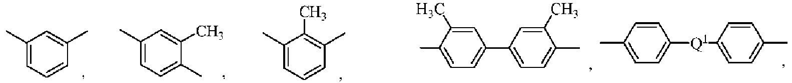 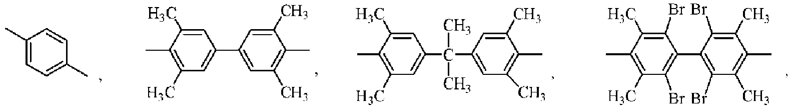 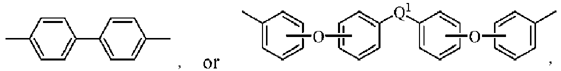 wherein Q¹ is -O-, -S-, -C(O)-, -N=N-, -SO₂-, -SO-, or -P(R^{a})(=O)-; R^{a} is a C₁₋₈ alkyl, C₆₋₁₂ aryl, or - C_{y}H_{2y}-; y is an integer from 1 to 5 or a halogenated derivative thereof, or -(C₆H₁₀)-; and z is an integer from 1 to 4; more preferably wherein the diamine is 1,4-butane diamine, 1,5-pentanediamine, 1,6- hexanediamine, 1,7-heptanediamine, 1,8-octanediamine, 1,9-nonanediamine, 1,10-decanediamine, 1,12- dodecanediamine, 1,18-octadecanediamine, 3-methylheptamethylenediamine, 4,4- dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, 1,3-bis(4-aminophenoxy)benzene, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5- methyl-4,6-diethyl-1,3-phenylene-diamine, benzidine, 3,3'-dimethylbenzidine, 3,3'-dimethoxybenzidine, 1,5-diaminonaphthalene, 9, 10-dimethylanthracene, 4,4'-methylenedianiline, 4,4'-oxydianiline, 4,4'- azodianiline, bis(4-aminophenyl) methane, bis(2-chloro-4-amino-3,5-diethylphenyl) methane, bis(4- aminophenyl) propane, 2,4-bis(p-amino-t-butyl) toluene, bis(p-amino-t-butylphenyl) ether, bis(p-methyl- o-aminophenyl) benzene, bis(p-methyl-o-aminopentyl) benzene, 1,3-bis(4-aminophenoxy)benzene, 1,3- diamino-4-isopropylbenzene, bis(4-aminophenyl) sulfide, 4,4'-diaminodiphenylsulfone, 3,4'-diaminodiphenylsulfone, 3,3'-diaminodiphenylsulfone, bis(4-aminophenyl) ether, 2,6-diamino, 3,3'- diaminobenzophenone, 4,4'-diaminobenzophenone, a regioisomer thereof, a C₁₋₄ alkylated or poly(C₁₋₄)alkylated derivative thereof, a halogenated derivative thereof, or a combination thereof.

Aspect 8. The polyamic acid prepolymer composition of any one of aspects 1 to 7, comprising 2 to 95 weight percent of the amine-terminated polyetherimide oligomer, based on the total weight of the polyamic acid prepolymer composition.

Aspect 9. A varnish composition, comprising: the polyamic acid prepolymer composition of any one of aspects 1 to 8, wherein the polyamic acid prepolymer composition has been partially imidized to provide a polyamic acid, a polyetherimide-polyimide, or a combination thereof; and optionally a second crosslinking composition, an additive composition, a second solvent, or a combination thereof; wherein a dynamic viscosity of the varnish composition is 10,000 to 200,000 cP, or 10,000 to 100,000 cP, or 10,000 to 80,000 cP, as determined at a solids content of 10 wt% in 1-methylpyrrolidin-2-one at 25 °C.

Aspect 9a. The varnish of aspect 9, wherein the polyetherimide-polyimide is fully imidized.

Aspect 10. The varnish of Aspect 9, wherein the second solvent is the same as the solvent for the polyamic acid composition.

Aspect 10a. The varnish of Aspect 9, wherein the second solvent is different from the solvent for the polyamic acid composition.

Aspect 11. The varnish composition of aspect 9 or aspect 10 or aspect 10a, wherein the crosslinking composition or the second crosslinking composition comprises a curing accelerator, a catalyst, an initiator, a promoter, a crosslinking agent, or a combination thereof, preferably wherein the crosslinking agent is an epoxy resin, a bismaleimide resin, a cyanate ester resin, a vinyl resin, an acetylene resin, an acrylic resin, a polyimide resin, a benzocyclobutene resin, an urea resin, a melamine-formaldehyde resin, a urea-formaldehyde resin, a xylene resin, a diallylphthalate resin, an aniline resin, a furan resin, a polyurethane resin, a polyurea resin, a mineral-filled silicone, an unsaturated ester resin, a phenolic resin, a silicone resin, a fluororesin, a benzoxazine resin, or a combination thereof.

Aspect 12. The varnish composition of any one of Aspects 9 to 11, wherein the additive comprises a particulate filler, a fibrous filler, an organic filler, an antioxidant, a heat stabilizer, a light stabilizer, a ultraviolet light stabilizer, a ultraviolet light-absorbing compound, a near infrared light, absorbing compound, an infrared light-absorbing compound, a plasticizer, a lubricant, a release agent, an antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a second polymer, or a combination thereof.

Aspect 12a. The varnish composition of aspect 12, wherein the second polymer is not a polyamic acid or a polyetherimide-polyimide.

Aspect 13. A polyetherimide-polyimide composition comprising a fully cured product of the polyamic acid prepolymer composition of any one of aspects 1 to 8 or a fully cured varnish composition of any one of aspects 9 to 12.

Aspect 14. The polyetherimide-polyimide composition of aspect 13, having a glass transition temperature (T_{g}) of equal to or more than 150 °C, as determined by differential scanning calorimetry; a peel strength of greater than 1 N/mm, or greater than 2 N/mm, or greater than 3 N/mm, as determined according to IPC 2.4.8; a thermal decomposition temperature greater than 300 °C; a 24 hour water absorption of less than 1 weight percent; a coefficient of thermal expansion (CTE) below its T_{g} of not greater than or equal to 40 micrometer/meter-°C (mm/m-° C); a dielectric constant (Dk) of 2 to 5, or 2.5 to 4, or 2.8 to 3.2 when measured at 10 GHz and 23 °C, as determined by dielectric spectroscopy; a dissipation factor (Df) of 0.00001 to 0.01, or 0.001 to 0.01, or 0.001 to 0.008 when measured at 10 GHz and 23 °C, as determined by dielectric spectroscopy; or a combination thereof.

Aspect 15. An article comprising the polyetherimide-polyimide of aspect 13 or aspect 14, wherein the article is an extruded article, a molded article, a compression article, a fiber, a layer, a coating, a cast article, a prepreg, a sheet, a composite, or a laminate, or wherein the article comprises a mainboard, a sheet, an insulating layer, an insulating coating, a corrosive resistant coating, an insulating film, an adhesive film, a coverlay, a bonding sheet, a semiconductor, electrode protective films for a thin film transistor liquid crystal display, a copper-clad laminate, a flexible copper clad laminate, a circuit board, or a multilayer circuit board.

Aspect 16. A method of preparing the polyamic acid prepolymer composition of any one of Aspects 1-8, the method comprising combining the amine-terminated polyetherimide oligomer, the dianhydride or dianhydride derivative, and the optional diamine, catalyst, solvent, or combination thereof under conditions effective to form the polyamic acid prepolymer composition.

Aspect 18. The method of Aspect 16, wherein the method comprises: combining the dianhydride or dianhydride derivative with the solvent to form a mixture; adding an amine-terminated polyetherimide oligomer to the mixture; and optionally adding a diamine to the reaction mixture, under conditions effective to form the polyamic acid prepolymer composition.

Aspect 19. The method of Aspect 16, wherein the method comprises: combining an amine-terminated polyetherimide oligomer, and optionally a diamine, with a solvent to form a mixture; and adding a dianhydride or dianhydride derivative to the mixture, under conditions effective to form the polyamic acid prepolymer composition.

The compositions, methods, and articles can alternatively comprise, consist of, or consist essentially of, any appropriate components or steps herein disclosed. The compositions, methods, and articles can additionally, or alternatively, be formulated so as to be devoid, or substantially free, of any steps, components, materials, ingredients, adjuvants, or species that are otherwise not necessary to the achievement of the function or objectives of the compositions, methods, and articles.

The singular forms "a," "an," and "the" include plural referents unless the context clearly dictates otherwise. "Or" means "and/or" unless clearly indicated otherwise by context. The terms "first," "second," and the like, do not denote any order, quantity, or importance, but rather are used to distinguish one element from another. Reference throughout the specification to "an aspect" means that a particular element described in connection with the aspect is included in at least one aspect described herein, and may or may not be present in other aspects. The described elements can be combined in any suitable manner in the various aspects. "Combinations" is inclusive of blends, mixtures, alloys, reaction products, and the like. "Combination thereof" as used herein is an open term and refers to a combination comprising one or more of the listed items, optionally with one or more like items not listed.

All ranges disclosed herein are inclusive of the endpoints, and the endpoints are independently combinable with each other. The endpoints of all ranges directed to the same component or property are inclusive and independently combinable. Disclosure of a narrower range or more specific group in addition to a broader range is not a disclaimer of the broader range or larger group.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH₂-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂) or propenylene (-HC(CH₃)=CH₂-). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy, ethoxy, and sec-butyloxy. "Cycloalkyl" and "cycloalkylene" mean a monovalent and divalent cyclic hydrocarbon group, respectively, of the formula -CₙH₂ₙ₋ₓ and -CₙH₂ₙ₋₂ₓ- wherein x is the number of cyclization(s). "Aryl" means a monovalent, monocyclic, or polycyclic aromatic group (e.g., phenyl or naphthyl). "Arylene" means a divalent aryl group. "Alkylaryl" means an aryl group substituted with an alkyl group. "Arylalkyl" means an alkyl group substituted with an aryl group (e.g., benzyl). The prefix "halo" means a group or compound including one more halogen (F, Cl, Br, or I) substituents, which can be the same or different. The prefix "hetero" means a group or compound that includes at least one ring member that is a heteroatom (e.g., 1, 2, or 3 heteroatoms), wherein each heteroatom is independently N, O, S, or P.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkyl (e.g., benzyl), C₇₋₁₂ alkylaryl (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. The number of carbon atoms indicated in a group is exclusive of any substituents. For example - CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polyamic acid prepolymer composition comprising:
an amine-terminated polyetherimide oligomer;
a dianhydride or dianhydride derivative that is not a bis(ether anhydride), and optionally a bis(ether anhydride) or bis(ether anhydride) derivative;
a solvent; and
optionally a diamine, an end-capping agent, a branching agent, a crosslinking composition, or a combination thereof.

2. The polyamic acid prepolymer composition of claim 1,
wherein the amine-terminated polyetherimide oligomer is monofunctional, difunctional or polyfunctional,
preferably wherein the amine-terminated polyetherimide oligomer has a formula H₂N-R'-L-NH₂, wherein L comprises a polyetherimide linker and R' is an organic group,
more preferably wherein L comprises polyetherimide units of the formula 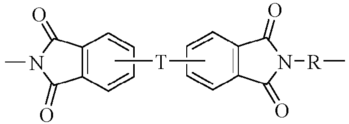 wherein
each R is independently the same or different, and is a substituted or unsubstituted divalent C₁₋₄₀ organic group, preferably a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, more preferably wherein R is a divalent group of one or more of the following formulas 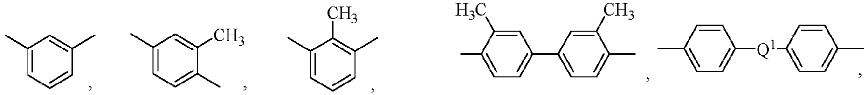 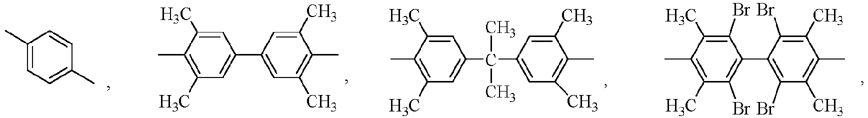 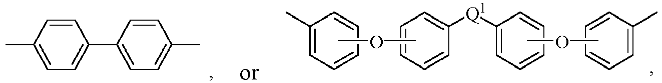
wherein Q¹ is -O-, -S-, -C(O)-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof, or - (C₆H₁₀)_{z}- wherein z is an integer from 1 to 4; and
T is -O- or a group of the formula -O-Z-O- wherein the divalent bonds of the -O- or the - O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded.

3. The polyamic acid prepolymer composition of any one of claims 1 to 2, wherein the amine-terminated polyetherimide oligomer has:
a glass transition temperature of greater than 150 °C, as determined by differential scanning calorimetry;
a weight average molecular weight equal to or greater than 1,500 grams per mole as determined by gel permeation chromatography using polystyrene standards;
a total reactive end group concentration of 50 to 5,000 microequivalents per gram, as determined by nuclear magnetic resonance spectroscopy;
a residual organic diamine of 0.05 to 1,000 ppm by weight, based on the total weight of the amine-terminated polyetherimide oligomer, as determined by ultra-performance liquid chromatography;
an amide-acid concentration of 0.5 to 5,000 microequivalents per gram, as determined by nuclear magnetic resonance spectroscopy;
a polydispersity of less than 4.5;
a non-reactive end group of greater than 0.05 ppm by weight, based on the total weight of the amine-terminated polyetherimide oligomer, as determined by nuclear magnetic resonance spectroscopy; or
a combination thereof.

4. The polyamic acid prepolymer composition of any one of claims 1 to 3, wherein the dianhydride is a substituted or unsubstituted C₄₋₄₀ dianhydride, preferably pyromellitic dianhydride, oxydiphthalic anhydride, thioether diphthalic anhydride, sulfonyldiphthalic anhydride, biphenyldipthalic anhydride, cyclohexane dianhydride, benzophenone dianhydride, cyclobutane dianhydride, 3,3'-biphenoxy dianhydride, 3,4'-biphenoxy dianhydride, 4,4'-biphenoxy dianhydride, mellophanic dianhydride, a derivative thereof, an isomer thereof, a hydrogenated derivative thereof, or a combination thereof.

5. The polyamic acid prepolymer composition of any one of claims 1 to 4, wherein the bis(ether anhydride) is of the formula 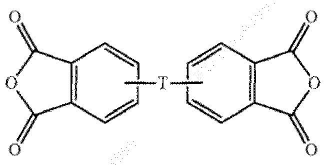
wherein T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded;
preferably wherein Z is a group derived from bisphenol A, resorcinol, hydroquinone, methyl hydroquinone, t-butyl hydroquinone, di-t-butyl hydroquinone, biphenol, tetramethyl bisphenol A, 6,6'-dihydroxy-3,3,3',3'-tetramethylspiro(bis)indane, 1,2-dihydroxybenzene, isophorone bisphenol, 1,1-bis(4-hydroxyphenyl)-1-phenyl-ethane, dimethylindanone bisphenol, 3,3'-dimethylbisphenol cyclohexane, fluorenone bisphenol, or a bi-(hydroxy aryl)-N-aryl isoindolinone.

6. The polyamic acid prepolymer composition of any one of claims 1 to 4, wherein the solvent is N,N-dimethylformamide, N,N-dimethylacetamide, N,N-diethylacetamide, N,N-dimethylmethoxyacetamide, N-methyl-2-pyrrolid-one, N-cyclohexylpyrrolidinone, N-methylcaprolactam, 1,3-dimethyl-2-imidazolidone, 1,2-dimethoxy-ethane, 1,3-dioxane, 1,4-dioxane, tetrahydrofuran, γ-butyrolactone, γ-caprolactone, dimethyl-sulfoxide, benzophenone, acetone, methyl ethyl ketone, methyl isobutyl ketone, cyclopentanone, cyclohexanone, diglyme, triglyme, tetra-glyme, N,N-dimethylethyleneurea, N,N-dimethylpropyleneurea, tetramethylurea, propylene glycol phenyl ether, toluene, xylene, anisole, veratrole, o-dichlorobenzene, chlorobenzene, trichloroethane, methylene chloride, chloroform, pyridine, picoline, ethyl lactate, n-butyl acetate, butyl cellosolve acetate, butyl carbitol acetate, ethyl cellosolve acetate, ethyl carbitol acetate, propylene carbonate, sulfolane, diphenyl ether, phenetole, benzonitrile, cresol, 1,3-dimethyl-2-imidazolidinone, diphenyl sulfone, water, an ionic liquid, or a combination thereof.

7. The polyamic acid prepolymer composition of any one of claims 1 to 6, wherein the optional diamine is present and is of formula H₂N-R-NH₂,
wherein R is a C₆₋₃₀ aromatic or heteroaromatic hydrocarbon, a straight or branched chain C₄₋₂₀ alkylene, a C₃₋₈ cycloalkylene, or a halogenated derivative thereof;
preferably wherein R is a divalent group of the formula: 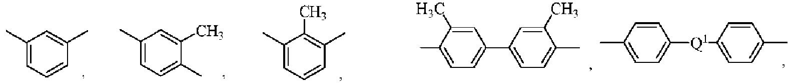 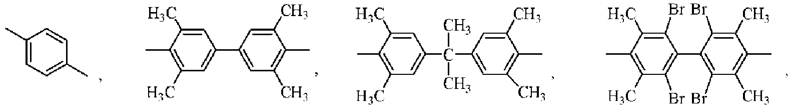 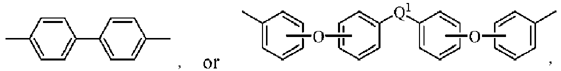 wherein
Q¹ is -O-, -S-, -C(O)-, -N=N-, -SO₂-, -SO-, or -P(R^{a})(=O)-;
R^{a} is a C₁₋₈ alkyl, C₆₋₁₂ aryl, or - C_{y}H_{2y}-;
y is an integer from 1 to 5 or a halogenated derivative thereof, or -(C₆H₁₀)-;
z is an integer from 1 to 4;
more preferably wherein the diamine is 1,4-butane diamine, 1,5-pentanediamine, 1,6-hexanediamine, 1,7-heptanediamine, 1,8-octanediamine, 1,9-nonanediamine, 1,10-decanediamine, 1,12- dodecanediamine, 1,18-octadecanediamine, 3-methylheptamethylenediamine, 4,4- dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, 1,3-bis(4-aminophenoxy)benzene, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5- methyl-4,6-diethyl-1,3-phenylene-diamine, benzidine, 3,3'-dimethylbenzidine, 3,3'-dimethoxybenzidine, 1,5-diaminonaphthalene, 9, 10-dimethylanthracene, 4,4'-methylenedianiline, 4,4'-oxydianiline, 4,4'- azodianiline, bis(4-aminophenyl) methane, bis(2-chloro-4-amino-3,5-diethylphenyl) methane, bis(4- aminophenyl) propane, 2,4-bis(p-amino-t-butyl) toluene, bis(p-amino-t-butylphenyl) ether, bis(p-methyl- o-aminophenyl) benzene, bis(p-methyl-o-aminopentyl) benzene, 1,3-bis(4-aminophenoxy)benzene, 1,3- diamino-4-isopropylbenzene, bis(4-aminophenyl) sulfide, 4,4'-diaminodiphenylsulfone, 3,4'-diaminodiphenylsulfone, 3,3'-diaminodiphenylsulfone, bis(4-aminophenyl) ether, 2,6-diamino, 3,3'- diaminobenzophenone, 4,4'-diaminobenzophenone, a regioisomer thereof, a C₁₋₄ alkylated or poly(C₁₋₄)alkylated derivative thereof, a halogenated derivative thereof, or a combination thereof.

8. The polyamic acid prepolymer composition of any one of claims 1 to 7, comprising 2 to 95 weight percent of the amine-terminated polyetherimide oligomer, based on the total weight of the polyamic acid prepolymer composition.

9. A varnish composition, comprising:
the polyamic acid prepolymer composition of any one of claims 1 to 8, wherein the polyamic acid prepolymer composition has been partially imidized to provide a polyamic acid, a fully imidized polyetherimide-polyimide, or a combination thereof; and
optionally a second crosslinking composition, an additive composition, a second solvent, or a combination thereof;
wherein a dynamic viscosity of the varnish composition is 10,000 to 200,000 cP, or 10,000 to 100,000 cP, or 10,000 to 80,000 cP, as determined at a solids content of 10 wt% in 1-methylpyrrolidin-2-one at 25 °C.

10. The varnish of claim 9, wherein the second solvent is the same as the solvent of the polyamic acid composition.

11. The varnish composition of claim 9 or claim 10, wherein the crosslinking composition or the second crosslinking composition comprises a curing accelerator, a catalyst, a promoter, an initiator, a crosslinking agent, or a combination thereof, preferably wherein the crosslinking agent is an epoxy resin, a bismaleimide resin, a cyanate ester resin, a vinyl resin, an acetylene resin, an acrylic resin, a polyimide resin, a benzocyclobutene resin, an urea resin, a melamine-formaldehyde resin, a urea-formaldehyde resin, a xylene resin, a diallylphthalate resin, an aniline resin, a furan resin, a polyurethane resin, a polyurea resin, a mineral-filled silicone, an unsaturated ester resin, a phenolic resin, a silicone resin, a fluororesin, a benzoxazine resin, or a combination thereof.

12. The varnish composition of any one of claims 9 to 11, wherein the additive composition comprises a particulate filler, a fibrous filler, an organic filler, an antioxidant, a heat stabilizer, a light stabilizer, a ultraviolet light stabilizer, a ultraviolet light-absorbing compound, a near infrared light, absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a polymer different from the polyamic acid or the partially cured polyetherimide-polyimide, the fully cured polyetherimide-polyimide, or a combination thereof.

13. A polyetherimide-polyimide composition comprising a fully cured product of the polyamic acid prepolymer composition of any one of claims 1 to 8 or a fully cured varnish composition of any one of claims 9 to 12.

14. The polyetherimide-polyimide composition of claim 13, having:
a glass transition temperature of equal to or more than 150 °C, as determined by differential scanning calorimetry;
a peel strength of greater than 1 N/mm, or greater than 2 N/mm, or greater than 3 N/mm, as determined according to IPC 2.4.8;
a thermal decomposition temperature greater than 300 °C;
a 24 hour water absorption of less than 1 weight percent;
a coefficient of thermal expansion below its glass transition temperature of not greater than or equal to 40 micrometer/meter-°C;
a dielectric constant of 2 to 5, or 2.5 to 4, or 2.8 to 3.2 when measured at 10 GHz and 23 °C, as determined by dielectric spectroscopy;
a dissipation factor of 0.00001 to 0.01, or 0.001 to 0.01, or 0.001 to 0.008 when measured at 10 GHz and 23 °C, as determined by dielectric spectroscopy; or
a combination thereof.

15. An article comprising the polyetherimide-polyimide of claim 13 or claim 14, wherein the article is an extruded article, a molded article, a compression article, a fiber, a film, a layer, a coating, a cast article, a prepreg, a sheet, a composite, or a laminate, or wherein the article comprises a mainboard, a sheet, an insulating layer, an insulating coating, a corrosive resistant coating, an insulating film, an adhesive film, a coverlay, a bonding sheet, a semiconductor, electrode protective films for a thin film transistor liquid crystal display, a copper-clad laminate, a flexible copper clad laminate, a circuit board, or a multilayer circuit board.
